# EUROPEAN PATENT SPECIFICATION

(11) **EP 3 242 800 B1**
(45) Date of publication and mention of the grant of the patent: **11.03.2020**
(21) Application number: 16703184.8
(22) Date of filing: 06.01.2016
(51) Int. Cl.: B32B 37/14, B32B 17/10, B32B 7/02

(54) **METHOD FOR REDUCING BOW IN LAMINATE STRUCTURES**
VERFAHREN ZUR REDUZIERUNG DER KRÜMMUNG IN LAMINATSTRUKTUREN
PROCÉDÉ DE RÉDUCTION D'ARC DANS DES STRUCTURES STRATIFIÉES

(30) Priority: 06.01.2015 US 201562100281 P
(43) Date of publication of application: 15.11.2017
(73) Proprietor: Corning Incorporated, Corning, New York 14831 (US)
(72) Inventor: COUILLARD, James Gregory, Ithaca, New York 14850 (US)
(74) Representative: Elkington and Fife LLP
(86) International application number: PCT/US2016/012252
(87) International publication number: WO 2016/112059

(56) References cited:
- WO-A1-2012/103190
- WO-A1-2014/035942
- WO-A1-2014/130335

## Description

### FIELD OF THE DISCLOSURE

The disclosure relates to laminate structures and methods for manufacturing laminate structures and, more particularly, to methods for reducing bow in asymmetric glass laminate structures.

### BACKGROUND

Laminate structures may be used for a wide range of applications in a variety of industries. For example, laminate structures may be used in architectural applications such as siding, decorative panels, cabinet installations, wall coverings, and the like. Laminate structures may also be used for furniture items and/or household appliances. For instance, laminate structures may be incorporated as outer panels for a cabinet, furniture item, and/or household appliance. Laminate structures can further serve as functional or decorative components in automobiles, e.g., windows, sunroofs, mirrors, and exterior or interior paneling.

Automotive and architectural windows are often made from laminate structures comprising two glass sheets of similar thickness and composition. However, for various applications it may be desirable to provide laminate structures comprising dissimilar substrates, e.g., substrates of different composition and/or thickness. For instance, metal-glass laminates, plastic-glass laminates, glass-ceramic laminates, and other similar laminates may be desirable for aesthetic or structural qualities.

In addition, glass-glass laminates comprising dissimilar glass substrates may also be desirable for various applications, for example, laminates comprising glasses having different compositions, thicknesses, and/or other properties such as coefficient of thermal expansion (CTE). For example, a thin sheet of ion-exchangeable glass may be laminated on a thicker soda lime glass sheet to provide enhanced damage resistance. Electrochromic windows and mirrors can comprise a thin, alkali-free glass substrate upon which an electrically active thin film is deposited, which can be laminated to a thicker soda lime glass substrate for enhanced structural rigidity.

Laminate structures comprising dissimilar substrates are referred to herein as "asymmetric" laminates. While asymmetric laminates may present one or more advantages as compared to symmetric laminates, the laminates can also present various challenges. For example, asymmetric laminates can comprise two or more substrates with different CTEs. During the lamination process, the substrates can be heated to a lamination temperature and subsequently cooled, e.g., to room temperature. When the laminate structure cools, the CTE mismatch between the substrates can lead to out-of-plane distortion ("bow"). Bow in laminate structures can interfere with subsequent processing steps such as film deposition, can result in unwanted optical distortion in the final product, and/or can result in a product that is unsuitable for the intended application and/or does not meet the desired target shape.

Accordingly, it would be advantageous to provide methods for making laminate structures that can reduce or eliminate bow in the structures after cooling. It would also be advantageous to provide asymmetric laminate structures with little or no distortion. These and other aspects of the disclosure are discussed in further detail herein.

WO 2014/035942 A1 discloses a glass-polymer laminate structure including a flexible glass substrate having a thickness no more than about 0.3mm. A polymer layer is laminated to a surface of the flexible glass substrate having a coefficient of thermal expansion (CTE) that is at least about 2 times a CTE of the flexible glass substrate. The polymer layer is laminated to the surface of the flexible glass substrate after thermally expanding the polymer layer to provide the flexible glass substrate with an in-plane compressive stress of at least about 30 MPa along a thickness of the flexible glass substrate.

WO 2012/103190 A1 discloses a laminated photovoltaic module package.

### SUMMARY

The invention is defined by claim 1 of the appended claims. The disclosure relates, in various embodiments, to methods for making laminate structures, the methods comprising positioning an interlayer between a first substrate and a second substrate to form a stack, heating the stack to a lamination temperature to form a laminate structure, and subjecting the laminate structure to at least one thermal cycle comprising cooling the laminate structure to a first temperature ranging from about -20 °C to about 35 °C and heating the laminate structure to a second temperature below the lamination temperature, the second temperature ranging from about 50 °C to about 120 °C, wherein the first and second substrates have different CTEs. Also disclosed herein are methods for reducing bow inlaminate structures comprising a first substrate and a second substrate having different CTEs, the methods comprising subjecting the laminate structures to at least one thermal cycle disclosed herein. Further disclosed herein are laminate structures made according to these methods.

In certain embodiments, the first and second substrates may be chosen from glass, glass-ceramics, ceramics, plastics, and metals. The interlayer may be chosen, for example, from polyvinyl butyral, ethylene-vinyl acetate, thermoplastic polyurethanes, and ionomers, to name a few. In various embodiments, the thermal cycle may comprise ramping between the first and second temperatures at a rate ranging from about 0.1 °C/min to about 2 °C/min, optionally holding the laminate structure at the first and/or second temperatures for a time period ranging from about 30 minutes to about 4 hours, and/or optionally holding the laminate structure at an intermediate temperature between the first and second temperatures. In further embodiments, the CTE of the first substrate can be greater than about 0.1% of the CTE of the second substrate, such as greater than about 10% or greater than about 30%, and vice versa. According to yet further embodiments, the laminate structure can include one or more additional layers, e.g., polymer layers, additional glass layers, reflective layers, and/or electrochromic layers.

Additional features and advantages will be set forth in the detailed description which follows, and in part will be readily apparent to those skilled in the art from that description or recognized by practicing the methods described herein, including the detailed description which follows, the claims, as well as the appended drawings.

It is to be understood that both the foregoing general description and the following detailed description present various embodiments of the disclosure, and are intended to provide an overview or framework for understanding the nature and character of the claims. The accompanying drawings are included to provide a further understanding, and are incorporated into and constitute a part of this specification. The drawings illustrate various non-limiting embodiments and together with the description serve to explain the principles and operations of the disclosure.

### BRIEF DESCRIPTION OF THE DRAWINGS

Various features, aspects and advantages of the present disclosure are better understood when the following detailed description is read with reference to the accompanying drawings wherein like structures are indicated with like reference numerals when possible, in which:
**FIG. 1** is a cross sectional view illustrating an exemplary laminate structure in accordance with aspects of the disclosure; and
**FIG. 2** is an illustration of the peak-to-valley bow for a laminate structure obtained using prior art lamination methods.

### DETAILED DESCRIPTION

### Laminate Structures

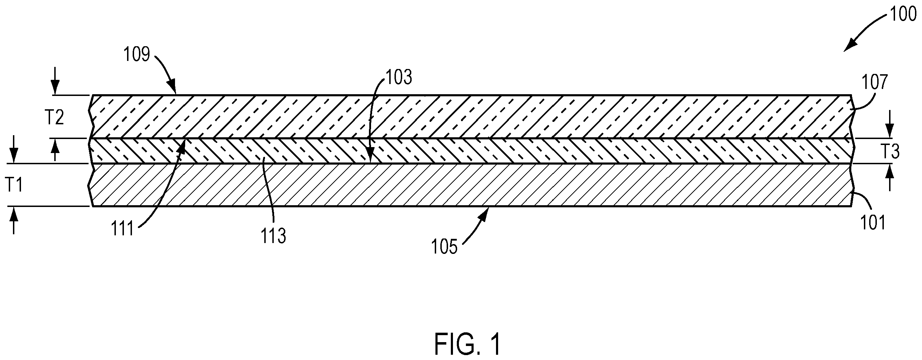

**FIG. 1** illustrates a cross sectional view of a laminate structure **100** according to various aspects of the disclosure. The laminate structure can include a first substrate **101,** a second substrate **107,** and an interlayer **113** attaching the first and second substrates. The first substrate **101** can have a first surface **103** and an opposing second surface **105,** with a thickness **T1** between the two surfaces. Similarly, the second substrate can have a first surface **109** and an opposing second surface **111,** with a thickness **T2** between the two surfaces. The interlayer **113** can also have a thickness **T3.**

The first and second substrates **101, 107** can comprise a wide range of materials including, but not limited to, glass, glass-ceramics, ceramics, plastics, and metals. According to one non-limiting embodiment, at least one of the first and second substrates is a glass substrate. In additional embodiments, both the first and second substrates comprise glass.

Suitable glass substrates may comprise, for example, soda lime, aluminosilicate, alkali-aluminosilicate, borosilicate, alkali-borosilicate, aluminoborosilicate, and alkali-aluminoborosilicate glasses, or other suitable glass materials. The glass substrate can, in some embodiments, be treated, e.g., chemically strengthened and/or thermally tempered, to increase the strength of the glass and/or its resistance to breakage and/or scratching. In one embodiment, the glass sheet substrate can comprise chemically strengthened glass such as Corning@ Gorilla@ glass from Corning Incorporated. Such chemically strengthened glass, for example, may be provided in accordance with U.S. Patent Application Nos. 7,666,511, 4,483,700, and/or 5,674,790. Corning® Willow® glass, Corning® Lotus™ glass, and Corning® EAGLE XG® glass from Corning Incorporated may also be suitable for use as a glass substrate in various embodiments.

According to further aspects, the glass substrate can have a compressive stress greater than about 100 MPa and a depth of layer of compressive stress (DOL) greater than about 10 microns, for example, a compressive stress greater than about 500 MPa and a DOL greater than about 20 microns, or a compressive stress greater than about 700 MPa and a DOL greater than about 40 microns. For instance, a chemical strengthening process for making Corning® Gorilla® glass can impart a relatively high compressive stress (e.g., from about 700 MPa to about 730 MPa, or even greater than about 800 MPa) at a relatively high DOL (e.g., about 40 microns, or even greater than about 100 microns).

According to further embodiments, the glass substrate may be acid-etched to further strengthen the glass substrate. Acid etching of glass may enable use of even thinner substrates in the laminate structures of the disclosure without deterioration in structural integrity or impact performance. The acid etching step, in some examples, can remove a thin layer from one or more of the surfaces of the glass substrate. By removing the above-mentioned surface layer, it is believed that the acid etching can clear away a majority of surface flaws smaller than 1 micron and/or round the tips of larger flaws which could otherwise negatively impact the stress concentration factor. The improvement of the glass surface by acid etching (e.g., removal of small surface flaws and rounding the tips of larger flaws) can improve glass strength, such as impact resistance. Moreover, only a relatively small depth of glass may be removed, such that a significant compressive stress drop in the glass sheet may not occur, as the glass can have a relatively high compressive stress at a much larger depth, such as about 40 microns from the surface, or even greater than about 100 microns in some examples.

The glass substrate can have a thickness extending between a first glass surface and an opposing second glass surface of less than or equal to about 10 mm, such as less than or equal to about 8 mm, less than or equal to about 6 mm, or less than or equal to about 3 mm. For example, the glass thickness can range from about 0.1 mm to about 3 mm, such as from about 0.3 to about 2 mm, from about 0.5 mm to about 1.5 mm, or from about 0.7 mm to about 1 mm, including all ranges and subranges therebetween. In one non-limiting embodiment, the glass substrate can have a thickness ranging from about 3 mm to about 10 mm, such as from about 4 mm to about 9 mm, from about 5 mm to about 8 mm, or from about 6 mm to about 7 mm, including all ranges and subranges therebetween.

The glass substrate can have a coefficient of thermal expansion (CTE) ranging, for example, from about 0.5 x 10⁻⁶/°C to about 15 x 10⁻⁶/°C, such as from about 1 x 10⁻⁶/°C to about 14 x 10⁻⁶/°C, from about 2 x 10⁻⁶/°C to about 13 x 10⁻⁶/°C, from about 3 x 10⁻⁶/°C to about 12 x 10⁻⁶/°C, from about 4 x 10⁻⁶/°C to about 11 x 10⁻⁶/°C, from about 5 x 10⁻⁶/°C to about 10 x 10⁻⁶/°C, from about 6 x 10⁻⁶/°C to about 9 x 10⁻⁶/°C, or from about 7 x 10⁻⁶/°C to about 8 x 10⁻⁶/°C, including all ranges and subranges therebetween. In certain embodiments, the glass substrate can have a CTE ranging from about 8 x 10⁻⁶/°C to about 10 x 10⁻⁶/°C, for instance, ranging from about 8.5 x 10⁻⁶/°C to about 9.5 x 10⁻⁶/°C. In other embodiments, the glass substrate can have a CTE ranging from about 3 x 10⁻⁶/°C to about 5 x 10⁻⁶/°C, such as from about 3.5 x 10⁻⁶/°C to about 4.5 x 10⁻⁶/°C. According to non-limiting embodiments, the glass substrate can be Corning® Gorilla® glass having a CTE ranging from about 7.5 to about 8.5 x 10⁻⁶/°C, Corning® EAGLE XG® glass having a CTE ranging from about 3 to about 4 x 10⁻⁶/°C, Corning® Lotus™ glass having a CTE ranging from about 3 to about 4 x 10⁻⁶/°C, or Corning® Willow® glass having a CTE ranging from about 3 to about 4 x 10⁻⁶/°C. In additional embodiments, the glass substrate can be soda lime glass having a CTE ranging from about 8 to about 10 x 10⁻⁶/°C.

The first and second substrates **101, 107** can also be chosen from metals and metal alloys, such as steel, e.g., cold rolled steel, galvanized steel, and stainless steel, aluminum, or any other suitable metal. Commercially available stainless steels can include, for example, 200 series, 300 series, and 400 series stainless steels, such as 201#, 201#, 220#, 230#, 301#, 304#, 305#, 312#, 316#, 321#, 409#, 410#, 416#, 430#, 440#, and 446# stainless steels, to name a few. The metal substrate can, in various embodiments, have a CTE ranging from about 5 x 10⁻⁶/°C to about 20 x 10⁻⁶/°C, such as from about 7 x 10⁻⁶/°C to about 17 x 10⁻⁶/°C, from about 8 x 10⁻⁶/°C to about 15 x 10⁻⁶/°C, from about 9 x 10⁻⁶/°C to about 12 x 10⁻⁶/°C, or from about 10 x 10⁻⁶/°C to about 11 x 10⁻⁶/°C, including all ranges and subranges therebetween.

The thickness of the metal substrate can vary depending on the particular application. Relatively thin metal sheets can be used in various applications, for example, to reduce material costs and/or weight of the laminated structure while still providing sufficient resistance to deformation. In further embodiments, relatively thick metal sheets may be used in various applications, for example, where further support is desired to maintain the mechanical integrity of the laminated structure. In some embodiments, the thicknesses may range from a 30 Gauge metal sheet up to a 10 Gauge metal sheet. In further embodiments, the thicknesses may range from a 25 Gauge metal sheet up to a 15 Gauge metal sheet. According to another non-limiting embodiment, a metal sheet having a thickness ranging from about 0.1 mm to about 5 mm may be used, for example, ranging from about 0.3 mm to about 3 mm, from about 0.5 mm to about 2 mm, or from about 1 mm to about 1.5 mm, including all ranges and subranges therebetween, although other thicknesses may be provided depending on the particular application.

A plastic substrate can also be included as a suitable laminate material, for example, molded and extruded plastics. Plastic substrates may, in certain embodiments, have a thickness ranging from about 0.1 mm to about 5 mm, such as from about 0.3 mm to about 3 mm, from about 0.5 mm to about 2 mm, or from about 1 mm to about 1.5 mm, including all ranges and subranges therebetween, although other thicknesses may be provided depending on the particular application. The plastic substrate can, in various embodiments, have a CTE ranging from about 5 x 10⁻⁶/°C to about 130 x 10⁻⁶/°C, such as from about 10 x 10⁻⁶/°C, to about 120 x 10⁻⁶/°C, from about 15 x 10⁻⁶/°C to about 110 x 10⁻⁶/°C, from about 20 x 10⁻⁶/°C to about 100 x 10⁻⁶/°C, from about 25 x 10⁻⁶/°C to about 90 x 10⁻⁶/°C, from about 30 x 10⁻⁶/°C to about 80 x 10⁻⁶/°C, from about 35 x 10⁻⁶/°C to about 70 x 10⁻⁶/°C, from about 40 x 10⁻⁶/°C to about 60 x 10⁻⁶/°C, or from about 45 x 10⁻⁶/°C to about 50 x 10⁻⁶/°C, including all ranges and subranges therebetween.

The first and second substrates **101, 107** can also be chosen from glass-ceramic and ceramic substrates. Suitable glass-ceramic substrates can include, for instance, lithium disilicate, nepheline, beta-spodumene, and beta-quartz glass-ceramics, to name a few. Non-limiting examples of commercially available glass-ceramics include Macor® and Pyroceram® from Corning Incorporated. The ceramic or glass-ceramic substrate can have a thickness ranging from about 0.5 mm to about 5 mm, such as from about 1 mm to about 4 mm, from about 1.5 mm to about 3 mm, or from about 2 mm to about 2.5 mm, including all ranges and subranges therebetween. The CTE of the ceramic or glass-ceramic substrate can range, for instance, from about 3 x 10⁻⁶/°C to about 20 x 10⁻⁶/°C, such as from about 5 x 10⁻⁶/°C to about 18 x 10⁻⁶/°C, from about 8 x 10⁻⁶/°C to about 15 x 10⁻⁶/°C, or from about 10 x 10⁻⁶/°C to about 12 x 10⁻⁶/°C, including all ranges and subranges therebetween.

It is to be understood that all CTE values disclosed herein are expressed as CTE measured over a temperature ranging from about 0 °C to about 300 °C. The CTEs of the first and second substrates, as provided herein, can thus independently range, by way of non-limiting example, from about 0.5 x 10⁻⁶/°C to about 130 x 10⁻⁶/°C, such as from about 1 x 10⁻⁶/°C to about 100 x 10⁻⁶/°C, from about 3 x 10⁻⁶/°C to about 80 x 10⁻⁶/°C, from about 5 x 10⁻⁶/°C to about 60 x 10⁻⁶/°C, from about 10 x 10⁻⁶/°C to about 50 x 10⁻⁶/°C, or from about 20 x 10⁻⁶/°C to about 30 x 10⁻⁶/°C, including all ranges and subranges therebetween. According to various embodiments, the CTEs of the first and second substrates may be mismatched, e.g., may have values differing by at least about 0.1%, such as at least about 1%, at least about 5%, at least about 10%, at least about 15%, at least about 20%, at least about 25%, at least about 30%, at least about 40%, at least about 50%, and higher. For larger parts, e.g., greater than about 1000 mm x 1000 mm, a lower degree of CTE mismatch can cause a noticeable bow, for example, as low as 0.1% difference in CTE, such as at least about 0.1%, 1%, 2%, 3%, 4%, or 5%. Similarly, CTE mismatch may cause bowing in smaller parts, e.g., when CTE mismatch is greater than about 10%. By way of a non-limiting example, the CTE of the first substrate can be as much as 10 times that of the second substrate, such as about 9, 8, 7, 6, 5, 4, 3, or 2 times that of the CTE of the second substrate, or vice versa. In other non-limiting embodiments, the difference between the first and second CTEs (e.g., CTE₁-CTE₂) can range, for instance, from about 1 x 10⁻⁶/°C to about 130 x 10⁻⁶/°C, such as from about 2 x 10⁻⁶/°C to about 120 x 10⁻⁶/°C, from about 3 x 10⁻⁶/°C to about 110 x 10⁻⁶/°C, from about 4 x 10⁻⁶/°C to about 100 x 10⁻⁶/°C, from about 5 x 10⁻⁶/°C to about 10 x 90⁻⁶/°C, from about 6 x 10⁻⁶/°C to about 80 x 10⁻⁶/°C, from about 7 x 10⁻⁶/°C to about 70 x 10⁻⁶/°C, from about 8 x 10⁻⁶/°C to about 60 x 10⁻⁶/°C, from about 9 x 10⁻⁶/°C to about 50 x 10⁻⁶/°C, from about 10 x 10⁻⁶/°C to about 40 x 10⁻⁶/°C, or from about 20 x 10⁻⁶/°C to about 30 x 10⁻⁶/°C, including all ranges and subranges therebetween.

As illustrated in **FIG. 1****,** the laminate structure can further include an interlayer **113** attaching the first substrate **101** to the second substrate **107.** The interlayer **113** can comprise a wide range of materials depending, e.g., on the application and the characteristics of the substrates. The interlayer can comprise various materials such as ethylene vinyl acetate (EVA), thermoplastic polyurethane (TPU), polyvinyl butyral (PVB), and ionomers, such as SentryGlas® ionomer from DuPont, or any other suitable interlayer material. In certain embodiments, the interlayer may be chosen from EVA and PVB.

According to non-limiting embodiments, the interlayer **113** can be selected from those having a Young's modulus greater than or equal to 15 MPa, such as greater than or equal to about 30 MPa, about 50 MPa, about 100 MPa, about 150 MPa, about 200 MPa, about 250 MPa, about 300 MPa, about 350 MPa, or about 400 MPa, including all ranges and subranges therebetween. PVB, for example, may have a Young's modulus greater than about 15 MPa, EVA can have a Young's modulus greater than about 50 MPa, and SentryGlas® ionomer can have a Young's modulus greater than about 275 MPa. In certain embodiments, the interlayer **113** may have a thickness **T3** ranging from about 0.1 mm to about 2 mm, such as from about 0.3 mm to about 1.5 mm, from about 0.5 mm to about 1.2 mm, from about 0.75 to about 1.1 mm, or from about 0.9 to about 1 mm, including all ranges and subranges therebetween.

The interlayer **113** can be selected to improve the strength of the laminated structure and can further help retain pieces from the substrates, e.g., glass substrates, in the event that the laminate breaks or shatters. According to certain embodiments, an optically clear interlayer can be provided that is substantially transparent, although opaque and possibly colored interlayers may be provided in further examples. In other embodiments, desirable images can be printed, for example, by screen printing or digital scanning printing, onto the interlayer for aesthetic and/or functional purposes. Because these printed images can be arranged on the interface (e.g., on the interlayer and/or an interior surface of an optically clear substrate), they can be well preserved from scratch damages during the product lifetime.

According to various embodiments, when processed according to the methods disclosed herein, a laminate structure having little or no bow can be produced. For instance, the laminate structure can comprise first and second glass substrates and an interlayer disposed between the substrates, wherein a minimum radius of curvature of the laminate structure at a temperature ranging from about -20 °C to about 90 °C is at least about 30 times greater than a maximum dimension of the laminate structure, and wherein a CTE of the first glass substrate is at least about 30% greater than a CTE of the second glass substrate. For example, the CTE mismatch between the first and second glass substrates can be greater than about 40%, 50%, 60%, 70%, 80%, 90%, 100%, 200%, 300%, or 500%, including all ranges and subranges therebetween. In other embodiments, the difference in CTE between the first and second glass substrates (CTE₁-CTE₂) can range from about 1 x 10⁻⁶/°C to about 10 x 10⁻⁶/°C, such as from about 2 x 10⁻⁶/°C to about 9 x 10⁻⁶/°C, from about 3 x 10⁻⁶/°C to about 8 x 10⁻⁶/°C, from about 4 x 10⁻⁶/°C to about 7 x 10⁻⁶/°C, or from about 5 x 10⁻⁶/°C to about 6 x 10⁻⁶/°C, including all ranges and subranges therebetween.

The laminate structure may, in various embodiments, comprise a thin glass sheet and a thicker glass sheet. For instance, the first glass substrate may have a thickness ranging from about 3 mm to about 10 mm and the second glass substrate may have a thickness ranging from about 0.3 mm to about 2 mm. The CTE of the first glass substrate can range, for example, from about 8 x 10⁻⁶/°C to about 10 x 10⁻⁶/°C, and the CTE of the second glass substrate can range from about 3 x 10⁻⁶/°C to about 4 x 10⁻⁶/°C.

The laminate structure can furthermore include a maximum dimension, e.g., length, width, diameter, etc., which is used herein to refer to the dimension of the substrate having the largest magnitude, e.g., as compared to other dimensions. For instance, for a rectangular sheet comprising two short sides and two long sides, the maximum dimension can correspond to a length of the long side. Non-rectangular, e.g., four-sided, glass sheets can similarly comprise a maximum dimension corresponding to the length of the longest side. Maximum dimension can likewise be determined for substrates having more or less than four sides, such as polygons, triangles, and circles, to name a few.

Radius of curvature is the inverse of curvature. Flatter substrates are defined by a higher radius of curvature and a completely flat substrate has an infinite radius of curvature. In certain embodiments, the radius of curvature of the laminate structure can be greater than the maximum dimension of the laminate structure. For example, the radius of curvature can be twice the maximum dimension, about 5 times, about 10 times, about 15 times, about 20 times, or about 25 times the maximum dimension of the laminate structure. According to various embodiments, the minimum radius of curvature of the laminate structure can be at least about 30 times, at least about 35 times, at least about 40 times, at least about 45 times, at least about 50 times, at least about 60 times, at least about 70 times, at least about 80 times, at least about 90 times, or at least about 100 times greater than the maximum dimension of the laminate structure, including all ranges and subranges therebetween. In further embodiments, the radius of curvature can be measured at a temperature ranging from about 0 °C to about 75 °C, such as from about 10 °C to about 50 °C, from about 20 °C to about 40 °C, or from about 25 °C to about 35 °C, including all ranges and subranges therebetween.

In various embodiments, the laminate structure can have an overall thickness ranging from about 0.2 mm to about 10 mm, such as from about 0.5 mm to about 8 mm, from about 1 mm to about 6 mm, from about 2 mm to about 5 mm, or from about 3 mm to about 4 mm, including all ranges and subranges therebetween. Exemplary laminate structures may have at least one other dimension (e.g., length, width, diameter) ranging from about 100 mm to about 1000 mm or greater, such as from about 200 mm to about 900 mm, from about 300 mm to about 800 mm, from about 400 mm to about 700 mm, or from about 500 mm to about 600 mm, including all ranges and subranges therebetween. These dimensions are, of course, exemplary only and other dimensions such as thickness, length, width, diameter, etc. can be used depending on the particular application.

It is to be understood that the laminate structures in accordance with the disclosure are not limited to structures comprising two substrates and/or a single interlayer. For example, the laminate structure can also include additional substrates and/or interlayers, such as a second interlayer attaching a third substrate to the laminate. According to further aspects of the disclosure, the laminate structures can comprise one or more additional substrates or layers, such as a polymer film, an additional glass layer, a reflective layer, an electrochromic layer, an electrolytic layer, a sensor, indicator, or active device. For example, an electrochromic layer may include one or more electrically active thin films deposited on one or more surfaces of the substrates. Suitable electrochromic layers can include, but are not limited to, inorganic layers comprising tungsten trioxide WO₃. Of course, other combinations of layers and their respective features can be used to provide a wide array of configurations which are intended to fall within the scope of the disclosure.

### Methods

Methods for making laminate structures and reducing bow in laminate structures are also disclosed herein. According to various embodiments, the methods disclosed herein can include a step of attaching the first substrate to the second substrate with an interlayer to produce, e.g., the three-layer laminate structure illustrated in **FIG. 1****.** The stack thus produced can then be heated to a lamination temperature using any suitable method or apparatus known in the art. By way of a non-limiting example, the stack can be placed in a vacuum chamber, such as in a vacuum or lamination bag. The stack may be wrapped or otherwise secured to prevent shifting of the stack. For example, the stack may be secured using high-temperature tape, such as polyester tape. A thin breather cloth can be wrapped around the stack according to various embodiments.

The stack(s) may be processed one at a time, in a single layer within the chamber, or in multiple layers of stacks, depending on the desired throughput. The lamination bag can be heat sealed and a vacuum port can be attached thereto. The vacuum chamber can be at least partially evacuated and the stack(s) can be heated using a predetermined temperature and pressure profile. For example, the lamination step may be carried out with specific temperature and pressure profiles used to achieve desired adhesion (bonding) quality of the laminated structure. Of course other apparatuses and methods for achieving the lamination temperature and/or pressure can be used and are envisioned as falling within the scope of the disclosure.

The lamination temperature can range, in some embodiments, from about 120 °C to about 160 °C, such as from about 125 °C to about 150 °C, from about 130 °C to about 145 °C, or from about 135 °C to about 140 °C, including all ranges and subranges therebetween. For example, the lamination step can comprise ramping to the lamination temperature at a ramp rate ranging from about 1 °C/min to about 10 °C/min, such as from about 2 °C/min to about 9 °C/min, from about 3 °C/min to about 8 °C/min , from about 4 °C/min to about 7 °C/min, or from about 5 °C/min to about 6 °C/min. According to additional embodiments, the lamination pressure can range from about 0.1 MPa to about 1.5 MPa, such as from about 0.2 MPa to about 1.4 MPa, from about 0.3 MPa to about 1.3 MPa, from about 0.4 MPa to about 1.2 MPa, from about 0.5 MPa to about 1.1 MPa, from about 0.6 MPa to about 1 MPa, or from about 0.8 MPa to about 0.9 MPa, including all ranges and subranges therebetween. Pressure, if applied, may be applied gradually during temperature ramping or upon reaching the lamination temperature. Pressure may be gradually applied, e.g., at a ramp rate ranging from about 20 Pa/min to about 100 Pa/min, such as from about 30 Pa/min to about 80 Pa/min, from about 40 Pa/min to about 70 Pa/min, or from about 50 Pa/min to about 60 Pa/min, including all ranges and subranges therebetween. The laminate structure may be held at the lamination temperature and pressure for a residence time ranging from about 10 minutes to about 120 minutes, such as from about 20 minutes to about 100 minutes, from about 30 minutes to about 80 minutes, or from about 40 minutes to about 60 minutes, including all ranges and subranges therebetween.

After the desired residence time, the temperature can be ramped down, e.g., to room temperature at a rate ranging from about 1 °C/min to about 10 °C/min, such as from about 2 °C/min to about 9 °C/min, from about 3 °C/min to about 8 °C/min, from about 4 °C/min to about 7 °C/min, or from about 5 °C/min to about 6 °C/min, including all ranges and subranges therebetween. According to various embodiments, the temperature can be ramped down while maintaining the lamination pressure which can, in certain embodiments, reduce the formation of bubbles in the interlayer. Alternatively, the pressure can be reduced before or during temperature ramping. A gradual pressure reduction can be used, in some embodiments, for instance, at a ramp rate ranging from about 20 Pa/min to about 100 Pa/min, such as from about 30 Pa/min to about 80 Pa/min, from about 40 Pa/min to about 70 Pa/min, or from about 50 Pa/min to about 60 Pa/min, including all ranges and subranges therebetween.

According to further embodiments, the interlayer may be conditioned prior to lamination, for example, to control the moisture content of the interlayer, to soften the interlayer, and/or to remove any residual air between the interlayer and the substrates. In one example, the step of conditioning can adjust the moisture content of the interlayer to less than about 1%, such as less than or equal to about 0.8%, such as less than or equal to about 0.5%, less than or equal to about 0.3%, or less than or equal to about 0.2%, including all ranges and subranges therebetween. Controlling the moisture content of the interlayer may be beneficial to improve bonding quality of the interlayer during the lamination procedure. According to various embodiments, a conditioning step may be used to soften a PVB interlayer prior to lamination.

Conditioning can be carried out according to any method known in the art. For example, the interlayer may be placed in a controlled environment where the temperature and/or humidity can be adjusted to achieve the desired moisture content of the interlayer. Conditioning can take place before the interlayer is positioned between the two substrates and/or after the stack is formed. For instance, prior to lamination, the stack may be pre-heated to a conditioning temperature ranging from about 75 °C to about 100 °C, such as from about 80 °C to about 95 °C, or from about 85 °C to about 90 °C, including all ranges and subranges therebetween.

After lamination, the laminate structure can be subjected to at least one thermal cycle. The thermal cycle can comprise, in various embodiments, cooling the laminate structure to a first temperature near or below room temperature and heating to a second temperature near or below the lamination temperature, e.g., between the target operating temperature for the laminate and the lamination temperature. Of course, the order of the thermal cycle is not limited to cooling followed by heating and can be reversed as appropriate for the desired thermal profile. In some embodiments, after lamination, the laminate structure can be cooled, e.g., to room temperature, and then subjected to at least one thermal cycle beginning with heating to the second temperature. In other embodiments, the laminate can be cooled, e.g., to room temperature, and then subjected to at least one thermal cycle beginning with cooling to the first temperature. In additional embodiments, the laminate structure can be subjected to the thermal cycle after reaching the lamination temperature, for instance, the laminate structure can be cooled to the first temperature and subsequently heated to the second temperature. Other variants of thermal cycling can be used and are intended to fall within the scope of the disclosure.

According to various embodiments, the laminate structure can be subjected to more than one thermal cycle, such as two or more, three or more, four or more, five or more, or ten or more thermal cycles, and so on. In certain embodiments, a single thermal cycle can be carried out over a period of several hours, up to a day, or more. For example, a thermal cycle can range from about 4 hours to about 24 hours, such as from about 6 hours to about 20 hours, from about 8 hours to about 16 hours, or from about 10 hours to about 12 hours, including all ranges and subranges therebetween. Thermal cycling of the laminate structure, e.g., one or more thermal cycles, can be carried out for an overall time period ranging from several hours to several days, for example, up to a week or more. In certain embodiments, the laminate structure can be subjected to thermal cycling for a time period ranging from about 4 hours to about 7 days, such as from about 8 hours to about 6 days, from about 12 hours to about 5 days, from about 24 hours to about 4 days, or from about 2 days to about 3 days, including all ranges and subranges therebetween.

According to various embodiments, the first temperature of the thermal cycle can be about room temperature or less, for example, ranging from about -20 °C to about 35 °C, such as from about -15 °C to about 30 °C, from about -10 °C to about 25 °C, from about -5 °C to about 20 °C, from about 0 °C to about 15 °C, or from about 5 °C to about 10 °C, including all ranges and subranges therebetween. In certain embodiments, the first temperature can be below room temperature, e.g., about 25 °C or less. In other embodiments, the first temperature can be above room temperature, e.g., up to about 50°C (such as up to about 40 °C, or up to about 45 °C), but below the second temperature. The second temperature of the thermal cycle can be near or below the lamination temperature and can range, for example, from about 50 °C to about 120 °C, such as from about 60 °C to about 115 °C, from about 70 °C to about 110 °C, from about 105 °C, from about 75 °C to about 100 °C, from about 80 °C to about 95 °C, or from about 85 °C to about 90 °C, including all ranges and subranges therebetween.

In further embodiments, the thermal cycle can comprise ramping to the first (or second) temperature, e.g., using a ramp rate ranging from about 0.1 °C/min to about 2 °C/min, such as from about 0.2 °C/min to about 1.5 °C/min, from about 0.3°C/min to about 1.2 °C/min, from about 0.4 °C/min to about 1 °C/min, or from about 0.5 °C/min to about 0.8 °C/min, including all ranges and subranges therebetween. For instance, ramping to the first (or second) temperature may occur over a time period ranging from about 15 minutes to about 4 hours, such as from about 30 minutes to about 3 hours, from about 45 minutes to about 2 hours, or from about 1 hour to about 1.5 hours, including all ranges and subranges therebetween. The laminate structure can, in some embodiments, be held at the first (or second) temperature, for example, for a time period ranging from about 0 to about 4 hours, such as from about 30 minutes to about 3 hours, from about 1 hour to about 2.5 hours, or from about 1.5 hours to about 2 hours, including all ranges and subranges therebetween.

The thermal cycle can further comprise ramping from the first temperature to the second temperature, and vice versa, at a ramp rate ranging from about 0.1 °C/min to about 2 °C/min, such as from about 0.2 °C/min to about 1.5 °C/min, from about 0.3 °C/min to about 1.2 °C/min, from about 0.4 °C/min to about 1 °C/min, or from about 0.5 °C/min to about 0.8 °C/min, including all ranges and subranges therebetween. For instance, ramping between the first and second temperatures may occur over a time period ranging from about 15 minutes to about 8 hours, such as from about 30 minutes to about 6 hours, from about 1 hour to about 4 hours, or from about 2 hours to about 3 hours, including all ranges and subranges therebetween.

According to various embodiments, the thermal cycle can comprise constant ramping between the first and second temperatures, e.g., without any hold times at these temperatures. The thermal cycle can gradually ramp between the first and second temperatures one or more times, eventually approaching room temperature. In some embodiments, the thermal cycle can be repeated with the same first and second temperatures, or different first and second temperatures. For example, the first and second temperatures can be increased and decreased, respectively, with each cycle until room temperature is eventually reached. In other embodiments, the thermal cycle can comprise holding the laminate structure at one or more intermediate temperatures, such as a temperature between the first and second temperatures, thus achieving a step-wise ramping. The hold time(s) at the intermediate temperature(s) can vary as described above for the hold times at the first and second temperatures.

Some exemplary thermal cycles are provided in Table I below solely for exemplary purposes and are not intended to and should not be interpreted as limiting on the appended claims. Schedule A represents a thermal cycle comprising ramping to the first and second temperatures with a hold time at each temperature. Schedule B represents a thermal cycle comprising constant ramping between the first and second temperatures with no hold times. Schedule C represents a thermal cycle with a hold time at an intermediate third temperature. Schedules A-C can be repeated several times as desired and can include a final step of cooling or heating to room temperature, as appropriate. Schedules D1-D5 represent multiple thermal cycles which can be carried out in succession either alone or after Schedule A, these cycles gradually approaching room temperature. Schedules D1-D5 can be repeated as a group or individual cycles within the schedule can be repeated as desired.

**Table I: Exemplary Thermal Cycles**

| Schedule | Time to Temp 1 | Temp 1/ Hold Time | Time to Temp 3 | Temp 3/ Hold Time | Time to Temp 2 | Temp 2/ Hold Time |
|---|---|---|---|---|---|---|
| A | 4 hours | -20°C / 2 hours | -- | --/-- | 4 hours | 90°C/ 2 hours |
| B | 6 hours | -20°C/ -- | -- | --/-- | 6 hours | 90°C/ -- |
| C | 2 hours | -20°C / 2 hours | 2 hours | 40°C/ 2 hours | 2 hours | 90°C/ 2 hours |
| D1 | 4 hours | -10°C / 2 hours | -- | --/-- | 4 hours | 60°C/ 2 hours |
| D2 | 4 hours | 0°C / 2 hours | -- | --/-- | 4 hours | 70°C/ 2 hours |
| D3 | 4 hours | 10°C / 2 hours | -- | --/-- | 4 hours | 60°C/ 2 hours |
| D4 | 4 hours | 20°C / 2 hours | -- | --/-- | 4 hours | 50°C/ 2 hours |
| D5 | 4 hours | 25°C / 2 hours | 4 hours | 35°C/ 2 hours | -- | --/-- |

Before and/or after lamination and thermal cycling, the methods disclosed herein can further include optional processing steps that may provide additional beneficial features to the laminate structure. For instance, additional processing steps for exemplary glass substrates can include chemical strengthening (e.g., ion exchange), thermal tempering, acid etching, anti-glare processing, mechanical roughening, sol-gel processing, film deposition, anti-microbial coating, and the like.

The methods disclosed herein can be used to produce asymmetric laminate structures with one or more advantages as compared to conventional lamination methods. For example, the ability to reduce the impact of CTE mismatch on laminate distortion may allow for a wider choice of substrate materials, interlayers, and/or laminate geometries. Further, the instant methods may provide a wider selection of distortion-free laminates, such as larger laminate structures and/or laminate structures comprising unconventional combinations of substrates. Because laminate structures manufactured according to the instant methods may have little or no distortion, e.g., bow, the optical performance of such laminates may also be improved. Finally the methods disclosed herein may be less complex than other methods for manufacturing asymmetric laminates, such as laminating under pressure and/or using asymmetric heating. Of course, it is to be understood that the laminate structures and methods disclosed herein may not have one or more of the above advantages, but are intended to fall within the scope of the appended claims.

It will be appreciated that the various disclosed embodiments may involve particular features, elements or steps that are described in connection with that particular embodiment. It will also be appreciated that a particular feature, element or step, although described in relation to one particular embodiment, may be interchanged or combined with alternate embodiments in various non-illustrated combinations or permutations.

It is also to be understood that, as used herein the terms "the," "a," or "an," mean "at least one," and should not be limited to "only one" unless explicitly indicated to the contrary. Thus, for example, reference to "a glass substrate" includes examples having two or more such glass substrates unless the context clearly indicates otherwise.

Ranges can be expressed herein as from "about" one particular value, and/or to "about" another particular value. When such a range is expressed, examples include from the one particular value and/or to the other particular value. Similarly, when values are expressed as approximations, by use of the antecedent "about," it will be understood that the particular value forms another aspect. It will be further understood that the endpoints of each of the ranges are significant both in relation to the other endpoint, and independently of the other endpoint.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that any particular order be inferred.

While various features, elements or steps of particular embodiments may be disclosed using the transitional phrase "comprising," it is to be understood that alternative embodiments, including those that may be described using the transitional phrases "consisting" or "consisting essentially of," are implied. Thus, for example, implied alternative embodiments to a structure that comprises A+B+C include embodiments where a structure consists of A+B+C and embodiments where a structure consists essentially of A+B+C.

The following Example is intended to be non-restrictive and illustrative only, with the scope of the invention being defined by the claims.

### EXAMPLE

Two asymmetric laminate structures having dimensions 66 cm x 76.2 cm (26" x 30") were prepared using the materials set forth in Table II below.

**Table II: Exemplary Laminates**

| Laminate | Substrate 1 | Substrate 2 | Interlayer |
|---|---|---|---|
| A | 0.7 mm Corning® EAGLE XG® | 6 mm soda lime glass | 0.76 mm PVB |
| B | 0.7 mm Corning® EAGLE XG® | 6 mm soda lime glass | 0.76 mm EVA |

Laminate structures A and B comprise Corning EAGLE XG®, which has a CTE of approximately 3.2 x 10⁻⁶/°C, and soda lime glass, which has a CTE of approximately 8.5-9.5 x 10⁻⁶/°C. In each case, the three layers were placed in contact with each other at room temperature. The laminate comprising a PVB interlayer was first heated to 95-100 °C under vacuum to soften the interlayer and remove any residual air between the layers. Both laminates were then heated to a lamination temperature of 140-150 °C at a pressure of about 1 MPa (140 psi) and then cooled back down to room temperature.

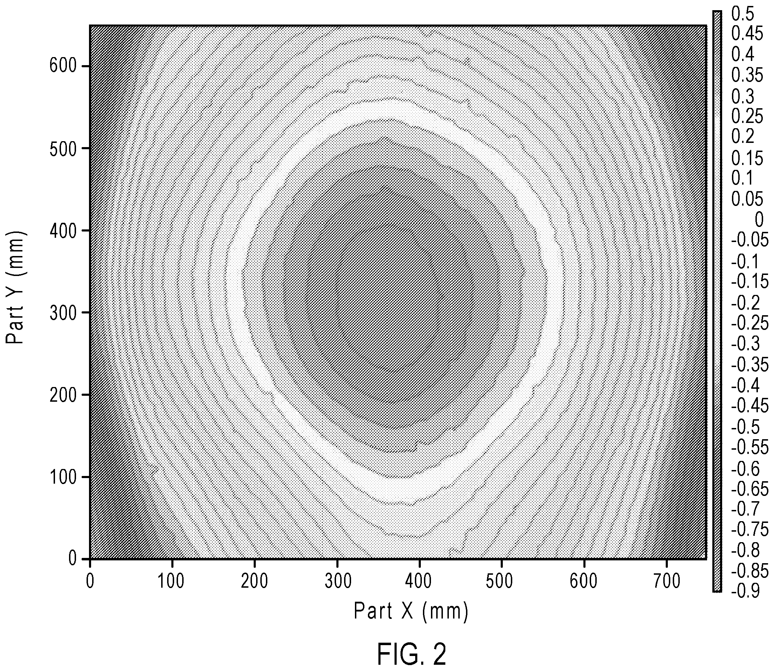

The glass substrates naturally contracted when cooled down from the lamination temperature to room temperature. Due to the differing CTEs, the two substrates contracted to varying degrees, resulting in uniform biaxial stress and thus spherical out-of-plane bow. **FIG. 2** shows the bow measured in the laminate comprising an EVA interlayer at room temperature. The peak-to-valley (center-to-corner) bow for this part was 1.4 mm.

After lamination, the laminate structures were subjected to thermal cycling between a first temperature (-20 °C) and a second temperature (90 °C), with two hour holds at each temperature and four hour ramps between the two temperatures. A total of fourteen cycles were carried out over a period of a week. The results are listed in Table III below.

**Table III: Out-of-Plane Bow for Laminate Structures**

| | Peak-valley bow (mm) | |
|---|---|---|
| | **PVB** | **EVA** |
| Before thermal cycling | 0.6 | 1.4 |
| After thermal cycling | 0.0 | 0.3 |

As demonstrated in Table III, the bow in each laminate structure was significantly reduced. The PVB interlayer laminate had no measurable bow remaining, while the bow in the EVA interlayer laminate was significantly decreased. Without wishing to be bound by theory, it is believed that the reduced bow in the laminate structures after thermal cycling is due to the ability of the interlayer to relax slightly at higher temperatures. The interlayer can become less viscous and can flow slightly at the second temperature, thereby relaxing the stress in the laminate due to CTE mismatch. Further, because the second temperature does not exceed the lamination temperature, the substrates can remain adhered and will not separate during thermal cycling. In many cases the overall bow of the laminate may be relatively low, thus even a small degree of relaxation of the interlayer can reduce the bow or, in some cases, eliminate the bow completely.

## Claims

1. A method for reducing bow in a laminate structure, comprising:
subjecting the laminate structure to at least one thermal cycle comprising cooling the laminate structure to a first temperature ranging from about -20 °C to about 35 °C and heating the laminate structure to a second temperature ranging from about 50 °C to about 120 °C;
wherein the laminate structure comprises a first substrate (101) and second substrate (107) attached with an interlayer (113), and wherein a coefficient of thermal expansion of the first substrate (101) is different than a coefficient of thermal expansion of the second substrate (107); and
**characterized in that** the thermal cycle comprises a ramp rate between the first and second temperatures ranging from 0.1 °C/min to 2 °C/min.

2. The method of claim 1, wherein the interlayer is chosen from polyvinyl butyral ethylene-vinyl acetate, thermoplastic polyurethane, and ionomers.

3. The method of claims 1 or 2, wherein the first (101) and second (107) substrates are independently chosen from glass, glass-ceramics, ceramics, polymers, and metals.

4. The method of any of the preceding claims, wherein the thermal cycle further comprises holding the laminate structure at the first temperature for a first time period ranging from 30 minutes to 4 hours, and holding the laminate structure at the second temperature for a second time period ranging from 30 minutes to 4 hours.

5. The method of any of the preceding claims, wherein the thermal cycle further comprises holding the laminate structure at one or more intermediate temperatures between the first and second temperatures.

6. The method of any of the preceding claims, wherein the coefficient of thermal expansion of the first substrate (101) is at least 30% greater than the coefficient of thermal expansion of the second substrate (107).

7. The method of any of the preceding claims, further comprising forming the laminate structure by:
positioning the interlayer between the first substrate (101) and second substrate (107) to form a stack; and
heating the stack to a lamination temperature to form the laminate structure.

## Patentansprüche

1. Verfahren zum Reduzieren von Bogenverzug in einer Laminatstruktur, das umfasst:
ein Aussetzen der Laminatstruktur wenigstens einem Wärmekreislauf, der ein Kühlen der Laminatstruktur auf eine erste Temperatur, die in einem Bereich von etwa -20 °C bis etwa 35 °C liegt, und ein Erwärmen der Laminatstruktur auf eine zweite Temperatur umfasst, die in einem Bereich von etwa 50 °C bis etwa 120 °C liegt;
wobei die Laminatstruktur ein erstes Substrat (101) und ein zweites Substrat (107) umfasst, die mit einer Zwischenschicht (113) befestigt sind, und wobei ein Wärmeausdehnungskoeffizient des ersten Substrats (101) sich von einem Wärmeausdehnungskoeffizienten des zweiten Substrats (107) unterscheidet; und
**dadurch gekennzeichnet, dass**
der Wärmekreislauf eine Rampenrate zwischen der ersten und der zweiten Temperatur umfasst, die in einem Bereich von 0,1 °C/min bis 2 °C/min liegt.

2. Verfahren nach Anspruch 1, wobei die Zwischenschicht aus Polyvinylbutyralethylen-Vinylacetat, thermoplastischem Polyurethan und Ionomeren ausgewählt ist.

3. Verfahren nach Ansprüchen 1 oder 2, wobei das erste (101) und das zweite (107) Substrat unabhängig aus Glas, Glaskeramik, Keramik, Polymeren und Metallen ausgewählt sind.

4. Verfahren nach einem der vorhergehenden Ansprüche, wobei der Wärmekreislauf ferner ein Halten der Laminatstruktur auf der ersten Temperatur für einen ersten Zeitraum, der in einem Bereich von 30 Minuten bis 4 Stunden liegt, und das Halten der Laminatstruktur auf der zweiten Temperatur für einen zweiten Zeitraum umfasst, der in einem Bereich von 30 Minuten bis 4 Stunden liegt.

5. Verfahren nach einem der vorhergehenden Ansprüche, wobei der Wärmekreislauf ferner das Halten der Laminatstruktur auf einer oder mehreren Zwischentemperaturen zwischen der ersten und der zweiten Temperatur umfasst.

6. Verfahren nach einem der vorhergehenden Ansprüche, wobei der Wärmeausdehnungskoeffizient des ersten Substrats (101) wenigstens 30 % größer als der Wärmeausdehnungskoeffizient des zweiten Substrats (107) ist.

7. Verfahren nach einem der vorhergehenden Ansprüche, das ferner ein Ausbilden der Laminatstruktur umfasst durch:
ein Positionieren der Zwischenschicht zwischen das erste Substrat (101) und das zweite Substrat (107), um einen Stapel auszubilden; und
ein Erwärmen des Stapels auf eine Laminierungstemperatur, um die Laminatstruktur auszubilden.

## Revendications

1. Procédé de réduction de la cambrure dans une structure de stratifié, comprenant :
l'assujettissement de la structure de stratifié à au moins un cycle thermique comprenant le refroidissement la structure de stratifié à une première température comprise entre environ -20 °C et environ 35 °C et le chauffage de la structure de stratifié à une seconde température comprise entre environ 50 °C et environ 120 °C ;
dans lequel la structure de stratifié comprend un premier substrat (101) et un second substrat (107) attaché avec une couche intercalaire (113), et dans lequel un coefficient d'expansion thermique du premier substrat (101) est différent d'un coefficient d'expansion thermique du second substrat (107) ; et **caractérisé en ce que** le cycle thermique comprend une vitesse de rampe entre les première et seconde températures comprise entre 0,1 °C/min et 2 °C/min.

2. Procédé selon la revendication 1, dans lequel la couche intercalaire est choisie parmi le polyvinyl butyral éthylène -acétate de vinyle, le polyuréthane thermoplastique, et des ionomères.

3. Procédé selon la revendication 1 ou la revendication 2, dans lequel les premier (101) et second (107) substrats sont indépendamment choisis parmi le verre, le vitrocéramique, les céramiques, les polymères et les métaux.

4. Procédé selon l'une quelconque des revendications précédentes, dans lequel le cycle thermique comprend en outre le maintien de la structure de stratifié à la première température pendant une première période de temps comprise entre 30 minutes et 4 heures, et le maintien de la structure de stratifié à la seconde température pendant une seconde période de temps comprise entre 30 minutes et 4 heures.

5. Procédé selon l'une quelconque des revendications précédentes, dans lequel le cycle thermique comprend en outre le maintien de la structure de stratifié à au moins une température intermédiaire entre les première et seconde températures.

6. Procédé selon l'une quelconque des revendications précédentes, dans lequel le coefficient d'expansion thermique du premier substrat (101) est au moins 30% supérieur au coefficient d'expansion thermique du second substrat (107).

7. Procédé selon l'une quelconque des revendications précédentes, comprenant en outre la formation de la structure de stratifié en :
positionnant la couche intercalaire entre le premier substrat (101) et le second substrat (107) afin de former un empilement ; et
chauffant l'empilement à une température de stratification afin de former la structure de stratifié.
